## Europäisches Patentamt

## European Patent Office

## Office européen des brevets

(11) Veröffentlichungsnummer: **0 109 927**
**B1**

(12) **EUROPÄISCHE PATENTSCHRIFT**

(45) Veröffentlichungstag der Patentschrift:
**03.06.87**

(21) Anmeldenummer: **83810471.9**

(22) Anmeldetag: **12.10.83**

(51) Int. Cl.⁴: **B 62 B 5/02, B 60 B 19/00**

㊸ Laufrad.

(30) Priorität: **19.10.82 CH 6089/82**

(43) Veröffentlichungstag der Anmeldung:
**30.05.84 Patentblatt 84/22**

(45) Bekanntmachung des Hinweises auf die Patenterteilung:
**03.06.87 Patentblatt 87/23**

(84) Benannte Vertragsstaaten:
**AT DE FR NL SE**

(56) Entgegenhaltungen:
**DE - A - 1 930 300**
**DE - A - 2 216 788**
**FR - A - 650 856**
**FR - A - 1 589 819**
**GB - A - 1 032 761**
**GB - A - 1 117 175**
**US - A - 2 736 564**
**US - A - 3 058 754**

**VDI-NACHRICHTEN, Band 23, Nr. 41, 8. Oktober 1969,**
**Seite 60, Technisches Geschehen "Treppauf, treppab"**

(73) Patentinhaber: **von Rohr, Martin, Waldweg 8,**
**CH-4153 Reinach (CH)**

(72) Erfinder: **von Rohr, Martin, Waldweg 8, CH-4153 Reinach**
**(CH)**

(74) Vertreter: **Eschmann, Heinz et al, A. Braun, Braun,**
**Héritier, Eschmann AG Patentanwälte**
**Holbeinstrasse 36-38, CH-4051 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Laufrad nach dem Oberbegriff des Patentanspruchs 1. Ein solches Rad ist aus VDI-Nachrichten, Band 23, Nr. 41, 8. Oktober 1969, Seite 60, bekannt.

Das Rad, als eines der ältesten und meist verwendeten Maschinenelemente, kann bekanntlich nur dort bedenkenlos eingesetzt werden, wo eine entsprechend planierte Fahrbahn zur Verfügung steht. Sobald die Fahrbahn Hindernisse aufweist, welche aus der Fahrbahn nach oben herausragen und im Verhältnis zum Raddurchmesser eine bestimmte Höhe haben, muss mit erheblichen Fortbewegungsschwierigkeiten gerechnet werden.

Um Hindernisse zu überwinden ist es bekannt, einen fünfstrahligen Radstern zu verwenden, dessen Radialarme eine solche Länge besitzen, dass sie als nabengefasste Speichen anzusehen sind, die an ihren Enden kleine Rollen tragen. Das Funktions- und Bewegungsprinzip dieser bekannten Laufräder, das sich in gleicher Weise auch für alle mit drei, vier und sechs Rollen arbeitenden Laufräder der bekannten Bauart anwenden lässt, lässt sich folgendermassen beschreiben: Wird aus einer Ausgangsposition, in der eine oder zwei Rollen pro Laufrad auf einer ebenen Fläche ruhen, eine Kraft in der gewünschten Bewegungsrichtung zur Überwindung eines Hindernisses aufgebracht, so greift die dem Hindernis zugewandte Laufrolle an der Hindernisoberseite an und hebelt des weiteren das Laufrad auf diese neue Höhenlage, die beispielsweise bei einer Treppe die nächstfolgende darstellt. Dabei wirkt also stets die sich auf der Ausgangshöhe befindende in Bewegungsrichtung vordere Rolle vom Beginn bis zum Ende der Hindernisüberwindung als Kippachse für die gesamte Radanordnung. Einmal erfordert das Hochziehen beispielsweise eines Sackkarrens, der mit einem derartigen bekannten Laufrad versehen ist, einen erheblichen Kraftaufwand, da z.B. die mit drei Laufrollen bestückten Laufräder zur Überwindung einer Hindernisstufe um jeweils 120° gedreht werden müssen; ansonsten sind aber diese Laufräder an der Aufwärtsbewegung nicht beteiligt. Zum anderen besteht ein weiterer wesentlicher Nachteil derartiger bekannter Laufräder darin, dass sie bei freikragenden Treppenstufen und überhaupt bei Treppen mit Stufen ohne eine vertikale Übergangsfläche zwischen zwei übereinanderliegenden Auftrittflächen nicht eingesetzt werden können, da sich die Speichen bzw. schlanken Radialarme der bekannten Laufräder zusammen mit ihren jeweils endseitig gelagerten Rollen funktionsbedingt an irgendeinem vertikalen Rand oder einer Vertikalwandung zwischen den Auftrittflächen abstützen müssen, damit die oben beschriebene Kippverlagerung um die jeweils vordere Rolle überhaupt stattfinden kann. Fehlt eine solche Vertikalwandung, werden die Speichen bzw. Radialarme der bekannten Laufräder mit Sicherheit in den offenen Spalt zwischen zwei Auftrittflächen hineinbewegt und sperren das bekannte Laufrad gegen eine weitere Verlagerung.

Der bereits angedeutete, bei bekannten Laufrädern benötigte erhöhte Kraftaufwand ist beispielsweise bei dreirädrigen Laufradanordnungen, die grössere Rollen besitzen, dadurch gegeben, dass der hochzuziehende Lastschwerpunkt in der Nabenachse stets auf einer von Stufe zu Stufe anzuhebenden Kurvenbahn mit einem Radienverlauf, der sich um die jeweilige stützende Rolle bewegt, verlagert werden muss, wozu ersichtlicherweise ein erheblich höherer Kraftaufwand aufzubringen ist als bei einer im wesentlichen geradlinigen, parallel zur Steigungsebene, beispielsweise einer Treppe, erfolgenden Transportbewegung.

Schliesslich besteht ein weiterer Nachteil bei all denjenigen bekannten Laufradanordnungen, welche immer nur eine Rolle pro Stufe für die Abstützung der gesamten Last zur Verfügung haben, darin, dass die gesamte Last beim Auf- und Abwärtstransport zusätzlich zu den vorgenannten Hub- oder Senkbewegungen stets auch gegen eine ständige Gefahr des Zurückrollens festgehalten werden muss. Wollte man beispielsweise bei einer grösseren Last während des Transports auf einer Treppe eine Ruhepause vornehmen, könnte diese Last nicht auf einer einmal erreichten Höhenlage über die Radanordnung selbst abgestützt werden, sie müsste ständig noch gegen ein Herunterrollen gesichert bzw. festgehalten werden, da die jeweils Last tragende eine Laufrolle pro Laufrad immer labil abgestützt bleibt, bis eine Ebene erreicht ist, die es gestattet, die Last auf jeweils zwei Laufrollen abzustützen.

Neben den bereits erwähnten Nachteilen, die sich aus der speichenartigen Anordnung von fünf Laufrollen pro Drehstern ergeben, ist noch zu erwähnen, dass bei einer Abwärtsfortbewegung von einer Rolle zur nächsten vor allem unter erhöhten Lastverhältnissen relativ harte Stösse auf die jeweilige Laufrolle ausgeübt werden, welche die Laufradanordnung insgesamt und auch gegebenenfalls die zu transportierende Ladung beeinträchtigen können. Auch kann beispielsweise bei dem Transport schwerer Lasten über Holztreppen der nachteilige Effekt auftreten, dass die Laufrollen kleinen Durchmessers infolge ihrer Lagerung an den Endabschnitten sternförmiger Speichen Markierungen in die Holzoberfläche eingraben. Insgesamt erschweren Laufrollen kleinen Durchmessers vor allem auf unebenem Untergrund den Transport erheblich. Sie wurden trotzdem bei den bekannten fünfrädrigen Laufrädern vor allem deshalb eingesetzt, weil deren Bewegungsprinzip einen möglichst freien Winkelbereich zwischen benachbarten Laufrollen bzw. den abstützenden Speichen erfordert, damit von einer jeweils in Laufrichtung vorderen Rolle das Hindernis von der Speiche auch übergriffen werden kann.

Die Aufgabe der Erfindung besteht daher darin, ein Laufrad der eingangs definierten Art unter Vermeidung der Nachteile des Bekannten zu schaffen, das in der Lage ist, bei erhöhter Sicherheit eine problemlose Handhabung bei einem geringen Kraftaufwand für die Überwindung von Treppenstufen zu gewährleisten. Die erfindungsgemässe Lösung dieser Aufgabe ist im Patentanspruch 1 gekennzeichnet. Vorteilhafte Ausführungsformen ergeben sich aus den abhängigen Ansprüchen. Ausführungsbeispiele der Erfindung werden nachstehend anhand von Zeichnungen näher erläutert. Es zeigen:

Fig. 1 ist eine vereinfachte Seitenansicht einer Anwendungsform des erfindungsgemässen Laufrades;

Fig. 2 und 3 veranschaulichen Antriebsmöglichkeiten anhand schematischer Seitenansichten;

Fig. 4 zeigt ein solches Laufrad in perspektivischer Ansicht;

Fig. 5 ist eine Perspektivansicht einer Variante der Laufrollenlagerung;

Fig. 6 bis 9 sind schematisch vereinfachte Seitenansichten des Rades in vier verschiedenen Phasen beim Erklimmen einer Treppenstufe.

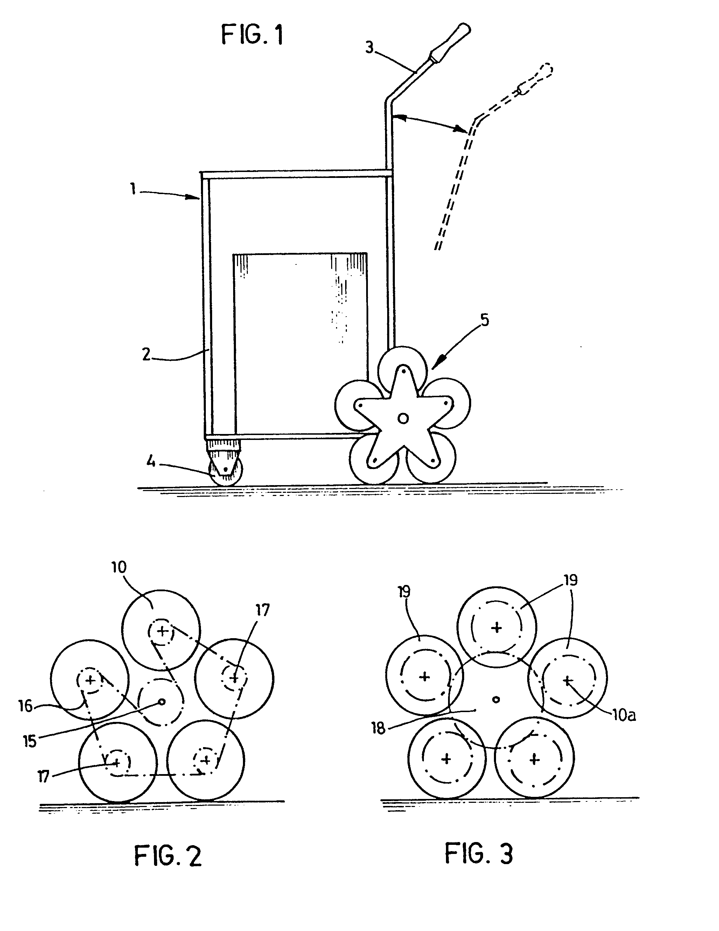

Fig. 1 zeigt einen Handwagen 1, wie er beispielsweise von Kaminfegern zum Reinigen von Heizkesseln gebraucht wird. Da sind die Heizkessel meist in den Untergeschossen bzw. Kellerräumen befinden, muss ein solcher Wagen täglich mehrere Male auf Treppen auf- und abbewegt werden. Die Handhabung des Wagens auf Treppen wird noch dadurch besonders erschwert, dass derselbe in Anbetracht der in ihm untergebrachten Gerätschaften und der Absaugeapparatur ein erhebliches Gewicht aufweist.

Der Rahmen 1 besitzt ein Gestell 2, zwei am Oberteil befestigte Griffe 3 sowie vier Räder. Die beiden mit 4 bezeichneten Laufräder entsprechen der bekannten Bauart und sind vorzugsweise gummibereift. Die beiden anderen, mit 5 bezeichneten Räder sind dagegen speziell auf die Überwindung von Hindernissen, insbesondere Treppenstufen, ausgelegt und werden nachstehend in bezug auf ihren konstruktiven Aufbau und ihre Funktion beschrieben.

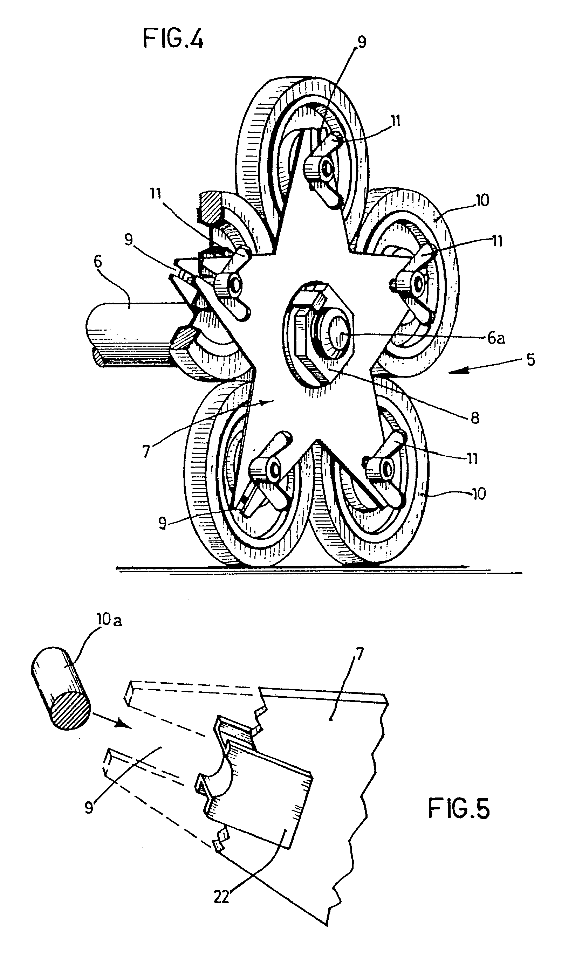

Gemäss Fig. 4 sind an einer Hauptachse 6, die ihrerseits drehbar an der Unterseite des Gestells 2 gelagert ist, zwei Drehsternpaare 7 mittels einer Mutter 8 befestigt, die auf einem Gewindeteil 6a der Hauptachse 6 aufgeschraubt ist. Jeder Drehstern 7 ist der Form des Davidsterns entsprechend fünfstrahlig und weist an jedem seiner radialen Arme einen radialen Schlitz 9 auf. In die Schlitze der beiden in gegenseitigem Abstand auf der Hauptachse 6 angeordneten Drehsterne 7 sind von aussen her Laufrollen 10 mit ihren Achsen 10a eingeschoben und durch Flügelmuttern 11 gesichert. Die Laufrollen 10 können somit einerseits so weit in Richtung der Hauptachse 6 nach innen eingeschoben werden, bis sie auf die Enden der Schlitze 9 auftreffen. Je nach Bedarf können die Laufrollen aber auch in einer beliebigen Zwischenstellung, d.h. in grösserem Abstand von der Hauptachse 6, mittels der Flügelmuttern 11 arretiert werden.

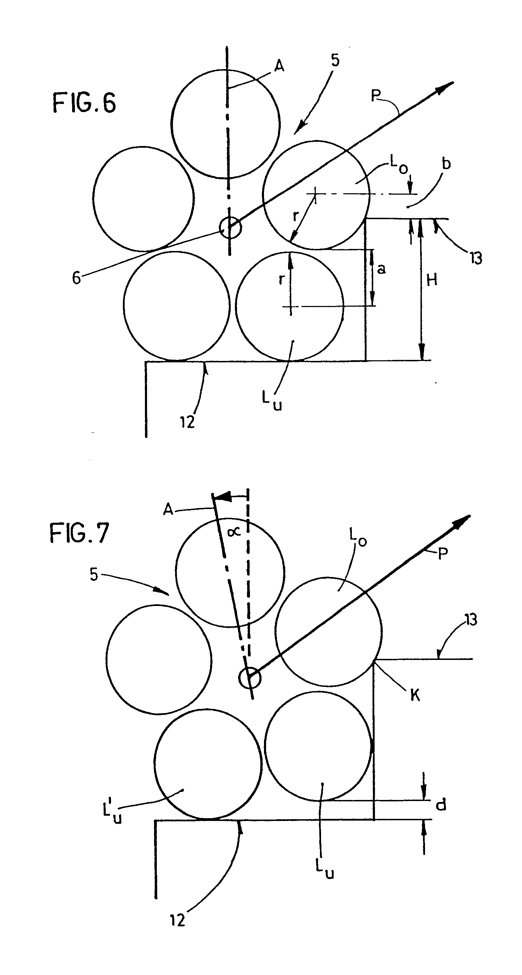

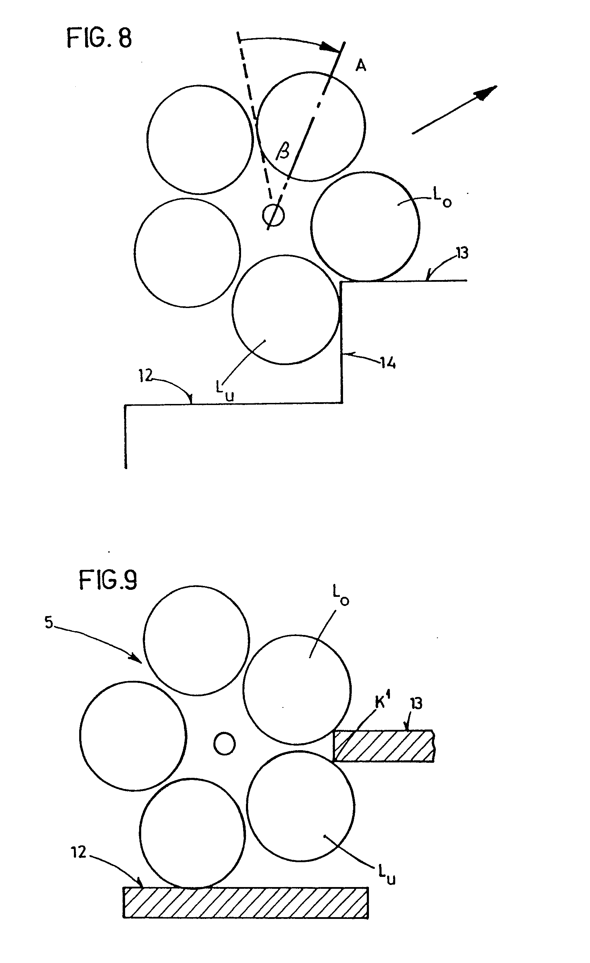

Die Funktion des beschriebenen Rades 5 beim Überwinden einer Treppenstufe zeigen die Fig. 6 bis 9, welche verschiedene zeitlich aufeinanderfolgende Phasen veranschaulichen. Gemäss Fig. 6 befindet sich das Radpaar 5 auf dem unteren Absatz einer Treppenstufe. Um den Wagen die Treppe hinaufzubewegen, greift an der Hauptachse 6 eine Kraft P an, die beispielsweise von einer den Wagen am Griff 3 ziehenden Person herrühren kann. Andere Antriebsarten sind möglich und werden anschliessend noch besprochen.

Bezug nehmend auf Fig. 6 sind die Masse r und a so zu wählen, dass $2r + a > H > r + a$. In der in Fig. 1 dargestellten Ausgangslage ragt die Achsmitte der oberen Laufrolle $L_o$ infolgedessen um ein Mass b über die Kante der oberen Stufe 13. Unter dem Einfluss der Kraft P überwindet obere Laufrolle $L_o$ somit die Stufenkante K, während gleichzeitig die untere Laufrolle um ein Mass d (Fig. 7) angehoben wird. Die vertikale Achse des Rades 5 wird dabei um den Winkel $\alpha$ nach hinten verschwenkt.

Beim weiteren Einwirken der Zugkraft P gelangt nun die obere Laufrolle $L_o$ auf die obere Treppenstufe 13, wobei die Radachse A nun um einen Winkel $\beta$ nach vorne kippt und die untere Laufrolle $L_u$ an der vertikalen Stirnfläche der Treppenstufe anliegt. Anschliessend gelangt dann auch die untere Laufrolle auf die obere Stufe und das beschriebene Spiel wiederholt sich.

Dank der gegenseitigen Zuordnung der oberen und der unteren Laufrolle wird die Überwindung von Treppen und ähnlichen Hindernissen sehr erleichtert, da die Last einerseits noch während eines Grossteils der ersten Hubphase (Fig. 7) auf die untere Stufe 12 abgestützt ist und andererseits gleich beim ersten Einwirken der Zugkraft P das Anheben des unteren Laufrades einen günstigen Einfluss auf die Kraftverhältnisse hat. Da die obere Laufrolle $L_o$ schon relativ früh auf der Treppenstufenkante K aufliegt, wird die untere Laufrolle $L'_u$ (Fig. 7) entlastet. Auch ist es ein grosser Vorteil, dass sich die beim Erklimmen der Stufe erforderliche Kippbewegung über einen bezüglich des bekannten Dreisternrades relativ kleinen Winkel erstreckt.

Einen weiteren Vorteil der beschriebenen Konstruktion zeigt Fig. 9. Besitzt die Treppe nämlich, wie dies bei zahlreichen Freitreppen, Kellertreppen und Estrichtreppen der Fall ist, keine die Stufen 12 und 13 verbindende Stirnwand, so lässt sich das Rad dennoch ohne jegliche Schwierigkeit die Treppe hinaufziehen. Es wird lediglich der Schwenkwinkel $\alpha$ (Fig. 7) etwas grösser, da die untere Laufrolle $L_u$ in den Zwischenraum zwischen den beiden Stufen 12/13 hineinragt. Auf einer gewissen Höhenlage liegt die untere Laufrolle $L_u$ jedoch an der unteren Stufenkante K' (Fig. 9) an und das Laufrad 5 lässt sich wiederum, wie beschrieben, nach oben ziehen.

Neben dem Ziehen des Gerätes von Hand kommen selbstverständlich auch motorische Antriebe in Frage. Zu diesem Zweck kann die Hauptachse 6 (Fig. 2) mit einem Motor gekoppelt und über ein Kettenrad 15, eine Kette 16 und weitere Kettenräder 17 mit den Laufrollen 10 verbunden sein.

Auch kann die Drehmomentübertragung, wie Fig. 3 zeigt, durch Zahnräder 19 erfolgen, die drehstarr mit den Laufrollenachsen 10a verbunden sind und mit einem zentralen, auf der Hauptachse 6 sitzenden Antriebsritzel kämmen. Die Beispiele der Drehmomentenübertragung können vom Fachmann noch im Rahmen der Erfindung erweitert werden.

Da die Höhe der zu überwindenden Hindernisse nicht immer gleich ist, kommt der Anpassbarkeit der Laufrollen 10 eine gewisse Bedeutung zu. Eine Verstellmöglichkeit ist anhand von Fig. 4 (Flügelmutter) bereits beschrieben worden. Um die Achsen 10a der Laufrollen noch sicherer zu halten und deren radiales Hineinrutschen unter Last zu verhindern, kann im Schlitz 9 ein Lager 22 radial verschiebbar so angeordnet sein, dass es sich in beliebiger Radialstellung durch bekannte Mittel fixieren lässt.

Das beschriebene Rad lässt sich für die verschiedensten Fortbewegungsmittel, z.B. Sackkarren, Rollstühle, Kinderwagen, Postkarren etc. und ganz allgemein alle auf Räder laufenden Wagen einsetzen, welche Hindernisse in Form von Treppenstufen, Türschwellen etc. überwinden müssen. In allen Fällen ist, wie z.B. aus Fig. 6 ersichtlich, der Radius r sowie der Abstand a (Fig. 6) so gewählt, dass die Laufrolle $L_o$ mit ihrer unteren Hälfte auf die Kante K auftrifft.

Um den Rollkomfort auf ebener Bahn zu verbessern, kann beispielsweise ein vom Griff 3 aus bedienbarer Mechanismus vorgesehen sein, mittels welchem eine der den Boden berührenden Laufrollen vom Boden abgehoben werden kann. Dieser Mechanismus kann z.B. an einer Laufrollenachse 10a angreifen und gestattet die Herabsetzung des Rollwiderstandes, was sich insbesondere in Kurven günstig auswirkt.

**Patentansprüche**

1. Laufrad zur Überwindung von Treppenstufen mit fünf zu einem Drehstern (7) zusammengefassten, auf gleich grosse Winkelabstände verteilt angeordneten Radialarmen drehbar gelagerten Laufrollen (10), von denen jeweils zwei untere Laufrollen ($L'_u$, $L_u$) das Laufrad (5) beim Fahren auf der ebenen Fläche sowie jeweils nach erfolgtem Überwinden der Treppenstufe auf deren Auftrittfläche (12, 13) abstützen, wobei das Laufrad (5) zur Überwindung der Treppenstufe in ansteigender Richtung in der Steigungsrichtung gezogen und in absteigender Richtung entsprechend entgegengesetzt nachgelassen wird, dadurch gekennzeichnet, dass die Radialarme und die Laufrolle (10) derart bemessen und einander zugeordnet sind, dass in der besagten auf zwei Laufrollen abgestützten Position des Laufrades (5) der Laufrollenradius r, der Abstand a zwischen der Achse der jeweils unteren, der Treppenstufe zugewandten Laufrolle ($L_u$) zur Unterkante der jeweils darüberliegenden oberen Laufrolle ($L_o$) und die übliche Steigungshöhe H der Treppenstufe der Beziehung $2r+a>H>r+a$ entsprechen, so dass die sich jeweils vor der hochragenden Treppenstufe befindliche untere Laufrolle ($L_u$) in bezug auf eine durch die Kontaktstelle der oberen Laufrolle ($L_o$) mit der in der Höhe H liegenden Treppenstufenkante gezogene Vertikale etwas hinter die jeweils darüberliegende Laufrolle ($L_o$) zurückversetzt ist und dass die genannte darüberliegende Laufrolle ($L_o$) beim Ziehen des Laufrads in ansteigender Richtung mit ihrer unterhalb ihrer Drehachse liegenden Hälfte auf die zu überwindende Treppenstufenkante auftritt und danach die darunterliegende Laufrolle ($L_u$) von der ebenen Fläche abhebt.

2. Laufrad nach Anspruch 1, dadurch gekennzeichnet, dass die Laufrollen (10) in radialer Richtung verstellbar an den Radialarmen gelagert und damit an die Höhe H der zu erwartenden Treppenstufe anpassbar sind.

3. Laufrad nach Anspruch 2, dadurch gekennzeichnet, dass die Laufrollen (10) mit ihren Laufrollenachsen (10a) in radialgerichteten Schlitzen (9) der Radialarme des Drehsterns (7) gelagert und in beliebiger Position innerhalb der Schlitze fixierbar sind.

4. Laufrad nach Anspruch 3, dadurch gekennzeichnet, dass in die Führungsnuten (9) hinter die Rollenachsen (10a) einsteckbare Anschlagelemente (22) vorgesehen sind, welche die Laufrollen (10) in einem vorgegebenen Radialabstand von der Achse (6) des Drehsterns (7) führen.

5. Laufrad nach einem der Ansprüche 1 bis 4, dadurch gekennzeichnet, dass sämtliche Laufrollen (10) desselben von einer endlosen Kette (16) angetrieben werden.

**Claims**

1. Running wheel for overcoming stair steps, with five running rollers (10) which are combined into a rotating star (7) and are mounted rotatably on radial arms distributed at equal angular distances from one another, and of which, at any given time, two lower running rollers ($L'_u$, $L_u$) support the running wheel (5), when it runs on the plane surface and after each stair step has been overcome, on the tread surface (12, 13) of the latter, the running wheel (5), in order to overcome the stair step in the ascending direction, being pulled in the direction of ascent and, in order to overcome the stair step in the descending direction, is eased correspondingly in the opposite direction to the direction of ascent, characterised in that the radial arms and the running rollers (10) have such dimensions and are so assigned to one another that, in the said position of the running wheel (5) supported on two running rollers, the running-roller radius r, the distance a between the axis of the respective lower running roller ($L_u$) facing the stair step and the bottom edge of the respective upper running roller $L_o$ located above it, and the conventional rise height H of the stair step correspond to the relation $2r+a>H>r+9$ so that, relative to a vertical line drawn through the point of contact between the upper running roller ($L_o$) and stairstep edge located at the height H, the respective lower running roller ($L_u$) located in

front of the stair step projecting upwards is set back somewhat behind the respective running roller ($L_o$) located above it, and, when the running wheel is pulled in the ascending direction, the said running roller ($L_o$) located above strikes, by means of its half located below its axis of rotation, against the stair-step edge to be overcome and then lifts off the running roller ($L_u$) located underneath it from the plane surface.

2. Running wheel according to claim 1, characterised in that the running rollers (10) are mounted on the radial arms so as to be adjustable in the radial direction and can consequently be adapted to the height H of the stair step to be expected.

3. Running wheel according to claim 2, characterised in that the running rollers (10) are mounted by means of their running-roller axles (10) in radially directed slots (9) of the radial arms of the rotating star (7) and can be fixed in any position within the slots.

4. Running wheel according to claim 3, characterised in that there are stop elements (22) which can be inserted into the guide slots (9) behind the roller axles (10a) and which guide the running rollers (10) at a predetermined radial distance from the axle (6) of the rotating star (7).

5. Running wheel according to claims 1 to 4, characterised in that all its running rollers (10) are driven by an endless chain (16).

**Revendications**

1. Roue porteuse destinée au franchissement de marches d'escalier, comportant cinq galets de roulement (10) tournant sur palier, agencés sur des bras radiaux répartis selon des distances angulaires identiques, et regroupés sur une étoile rotative (7), parmi ces galets de roulement, respectivement deux galets de roulement inférieurs ($L'_u$, $L_u$) supportent la roue porteuse (5) lors du passage sur une surface plane ainsi que respectivement, après avoir gravi la marche d'escalier, sur la partie horizontale de cette dernière (12, 13), de telle manière que, pour le franchissement de la marche d'escalier dans la direction ascendante, la roue porteuse (5) est tirée dans le sens ascendant et, dans la direction descendante, elle est relâchée de façon correspondante dans le sens opposé, caractérisée en ce que les bras radiaux et les galets de roulement (10) sont dimensionnés et agencés entre eux de telle manière que dans la position supportée précitée de la roue porteuse (5) par les deux galets de roulement, le rayon des galets de roulemen r, la distance a entre l'axe du galet de roulement ($L_u$) inférieur, faisant respectivement face à la marche d'escalier par rapport au bord inférieur du galet de roulement ($L_o$) supérieur respectivement situé audessus et la hauteur de dénivellation usuelle H de la marche d'escalier correspondent à la relation $2r + a > H > r + a$, de sorte que le galet de roulement ($L_u$) inférieur faisant respectivement face à la paroi verticale de la marche d'escalier, par rapport à une verticale tracée par le point de contact du galet de roulement supérieur ($L_o$) avec le bord de la marche d'escalier situé dans la hauter H, se trouve quelque peu en retrait derrière le galet de groulement ($L_o$) respectivement situé au-dessus et, en ce que le galet de roulement ($L_o$) situé au-dessus, lors de la traction de la roue porteuse dans la direction ascendante se présente avec sa moitié située au-dessous de son axe rotatif sur le bord de la marche d'escalier à franchir et soulève ensuite de la surface plane le galet de roulement ($L_u$) situé au-dessous.

2. Roue porteuse selon la revendication 1, caractérisée en ce que les galets de roulement (10) montés sur palier dans les bras radiaux, sont réglables dans la direction radiale et peuvent ainsi être adaptés à la hauteur H de la marche d'escalier attendue.

3. Roue porteuse selon la revendication 2, caractérisée en ce que les galets de roulement (10) avec leurs axes (10a) sont montés dans les fentes (9) dirigées radialement des bras radiaux de l'étoile rotative (7) et peuvent être fixés en n'importe quelle position à l'intérieur de la fente.

4. Roue porteuse selon la revendication 3, caractérisée en ce que, dans les fentes de guidage (9), sont prévus des éléments de butée (22) emboîtables derrière les axes de galets (10a), lesquels éléments de butée guident les galets de roulement (10) selon un espacement radial prédéterminé par rapport à l'axe (6) de l'étoile rotative (7).

5. Roue porteuse selon l'une quelconque des revendications 1 à 4, caractérisée en ce que tous les galets de roulement (10) de celle-ci sont entraînés par une chaîne sans fin (16).

# FIG. 1

# FIG. 2

# FIG. 3

# FIG.4

# FIG.5

FIG.6

FIG.7

FIG. 8

$A$

$\beta$

$\phi$

$L_o$

13

14

12

$L_u$

FIG.9

$L_o$

5

$K'$   13

$O$

12

$L_u$